# FASCICULE DE BREVET EUROPEEN

(11) **EP 3 371 054 B1**
(45) Date de publication et mention de la délivrance du brevet: **11.01.2023**
(21) Numéro de dépôt: 16715493.9
(22) Date de dépôt: 05.04.2016
(51) Int. Cl.: B64D 11/06, B64D 11/00, B60N 2/00, B60N 2/02

(54) **SYSTEME DE MANAGEMENT D'UNE CABINE D'AERONEF**
FLUGZEUGKABINENMANAGEMENTSYSTEM
AIRCRAFT CABIN MANAGEMENT SYSTEM

(30) Priorité: 04.11.2015 WO PCT/EP2015/193042
(43) Date de publication de la demande: 12.09.2018
(73) Titulaire: Zodiac Seats France, 36100 Issoudun (FR)
(72) Inventeur: SIDAMBAROM, Michael, 36100 Issoudun (FR); OBADIA, Jean-Marc, 36100 Issoudun (FR)
(74) Mandataire: Marconnet, Sébastien
(86) Numéro de dépôt international: PCT/EP2016/057450
(87) Numéro de publication internationale: WO 2017/076518

(56) Documents cités:
- EP-A1- 2 546 145
- WO-A1-97/28989
- WO-A1-2006/010702
- WO-A1-2008/036539
- US-A- 5 751 129
- US-B1- 6 929 218

## Description

La présente invention porte sur un système de management d'une cabine d'aéronef.

Habituellement, le personnel de bord doit opérer plusieurs contrôles avant le décollage et l'atterrissage d'un avion pour s'assurer que tous les sièges des passagers se trouvent dans une position fonctionnelle adaptée, dite position TTL ("Taxi-Take-Off-Landing" en anglais). Les membres du personnel de bord doivent ainsi vérifier notamment que tous les éléments du siège se trouvent dans une position correcte: la ceinture est bouclée, la tablette et le dossier sont en position relevée, les accoudoirs sont abaissés. Ces contrôles sont longs à effectuer et susceptibles de mener à des erreurs dans la mesure où ils sont réalisés par un opérateur humain.

En ce qui concerne la maintenance, la cabine doit être inspectée régulièrement pour détecter les éventuels dysfonctionnements. Certains défauts du siège ne sont pas facilement visibles à l'œil nu et nécessitent des tests de fonctionnement qui peuvent être longs à réaliser.

En outre, lorsqu'un défaut n'est pas détecté ou est détecté tardivement par les équipes de maintenance, le personnel de bord, ou dans le pire des cas par le passager, cela peut conduire à une insatisfaction du passager, à une mauvaise image de la compagnie aérienne, ou à une durée de maintenance excessive dans la mesure où le remplacement de la pièce n'a pas pu être anticipé.

Par ailleurs, le passager doit systématiquement adapter le siège à ses préférences: position du siège, hauteur du siège, fermeté du siège, éclairage, température de siège, etc... Il doit également rappeler constamment ses préférences en matière de films, de musique, ou d'alimentation, ce qui est fastidieux en particulier pour les voyageurs prenant fréquemment l'avion.

Le document US6929218 décrit un avion comprenant un système de surveillance central ainsi qu'un système de commande électronique destiné à être intégré dans un élément de siège.

Le document US5751129 décrit un module de siège comportant des capteurs intégrés. Le module est monté sur un cadre de siège, lequel est disposé sur un élément de base fixe.

Le document WO2008/036539 décrit des ensembles de sièges destinés à être montés notamment dans un aéronef. Des dispositifs associés aux sièges sont aptes à recevoir des informations sous la forme de préférences de réglages de siège pour les passagers auxquels les sièges sont affectés pour un voyage.

Le document WO9728989 décrit un système de mesures capacitives comprenant un ensemble d'électrodes, des moyens multiplexeurs pour relier ces électrodes à une électronique de mesure capacitive, des moyens de contrôle et de traitement, cet ensemble d'électrodes étant constitué d'un ou plusieurs groupes d'électrodes comprenant chacun plusieurs électrodes sensiblement juxtaposées et jointives pour former autant de tapis d'électrodes.

L'invention vise à remédier efficacement à au moins un des inconvénients précités en proposant un système de management d'une cabine d'aéronef selon la revendication 1.

D'autres modes de réalisation de l'invention sont définis par les revendications dépendantes.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles :
- La figure 1 est une vue en perspective d'un siège illustrant l'intégration de capteurs appartenant au système de management selon la présente invention;
- La figure 2 est un diagramme illustrant la fonctionnalité de détection des positions fonctionnelles du siège ainsi que la fonctionnalité de gestion des préférences du passager mises en œuvre par le système de management selon la présente invention;
- La figure 3 est un diagramme illustrant la fonctionnalité de gestion de la maintenance mise en œuvre par le système de management selon la présente invention.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

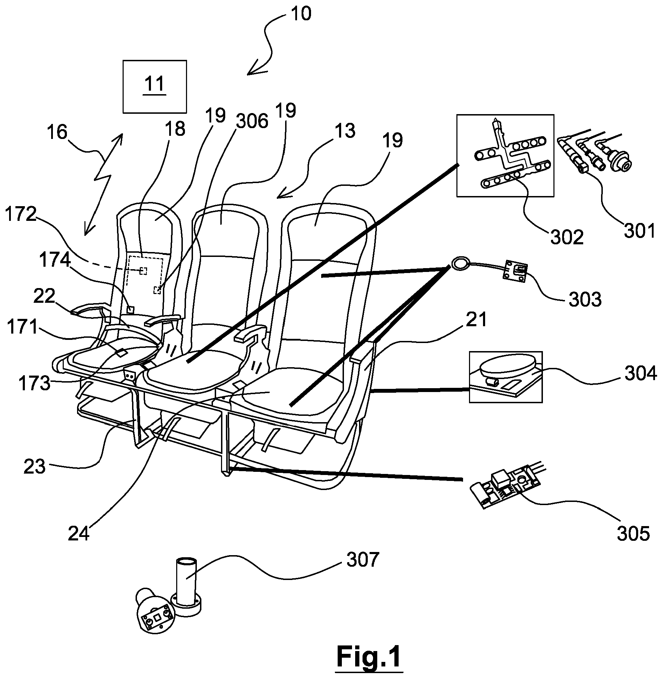

On a représenté sur la figure 1, un système de management 10 d'une cabine d'aéronef comportant une unité de contrôle 11 et au moins un capteur, avantageusement une pluralité de capteurs 171-174 et 301-307, intégré dans un siège 13. Le capteur est apte à établir une communication avec l'unité de contrôle 11 pour transmettre à l'unité de contrôle 11 au moins un signal relatif à au moins une mesure réalisée par le capteur, comme cela est expliqué plus en détails ci-après.

Selon un exemple particulier de réalisation, le siège 13 peut comporter notamment une ceinture 22, une tablette 18, un dossier 19, et au moins un accoudoir 21.

La communication entre le capteur et l'unité de contrôle 11 est effectuée de préférence via une liaison sans-fil 16, par exemple une liaison de type WIFI ou Bluetooth, ou infrarouge. En variante, la communication entre le capteur et l'unité de contrôle 11 pourra être effectuée via une liaison filaire.

Avantageusement, le capteur est muni d'un dispositif interne de captage d'énergie, notamment un système de captage d'énergie, de sorte qu'ils n'ont pas besoin d'être alimentés par une source d'énergie externe pour fonctionner. Le capteur pourra être configuré pour fonctionner, par exemple, à partir d'une énergie électromagnétique, mécanique (par exemple à partir de vibrations), calorifique (par exemple à partir de chaleur), lumineuse, ou autre. Le capteur pourra être de type passif ou actif en fonction de la mesure à effectuer.

Plus précisément, selon un exemple particulier de réalisation, parmi les capteurs utilisés, on prévoit un ensemble de capteurs 171-174 aptes à détecter un réglage de position opérationnelle du siège 13 avant un décollage ou lors d'un atterrissage de l'aéronef. La position opérationnelle à détecter est la position TTL ("Taxi, Take-Off, Landing" en anglais) dans laquelle au moins la ceinture 22 doit être bouclée, la tablette 18 et le dossier 19 doivent être en position relevée, et les accoudoirs 21 doivent être abaissés.

A cet effet, un capteur de présence 171 du passager sur le siège 13 est implanté dans le siège 13, notamment dans une assise 24 du siège 13. Le capteur de présence 171 pourra, par exemple, prendre la forme d'un capteur de pression ou un contacteur de position.

Un capteur de position 172 permet de détecter la position relevée de la tablette 18 du siège 13. Sur la figure 1, le capteur de position 172 et la tablette 18 sont représentés en pointillés car ils sont situés sur une face arrière du siège 13, notamment sur une face arrière du dossier 19.

Par ailleurs, un autre capteur de position 173 est situé sur la ceinture de sécurité 22 et permet de détecter que la ceinture de sécurité 22 est bouclée.

Un autre capteur de position 174 permet de détecter une position du dossier 19 du siège 13.

Les capteurs de position 172, 173 et 174 pourront prendre la forme de capteurs capacitifs ou résistifs ou de capteurs de contact. Ils peuvent identiques ou différents.

Dans l'exemple de réalisation de la figure 1, l'ensemble de capteurs 171-174 est intégré pour chaque place individuelle du siège 13, qui, selon la variante de réalisation présentée, comporte trois places. Le siège 13 comporte donc de façon plus générale un nombre adapté de capteurs, qui est au moins égal à un, pour un siège 13 comportant une place unique.

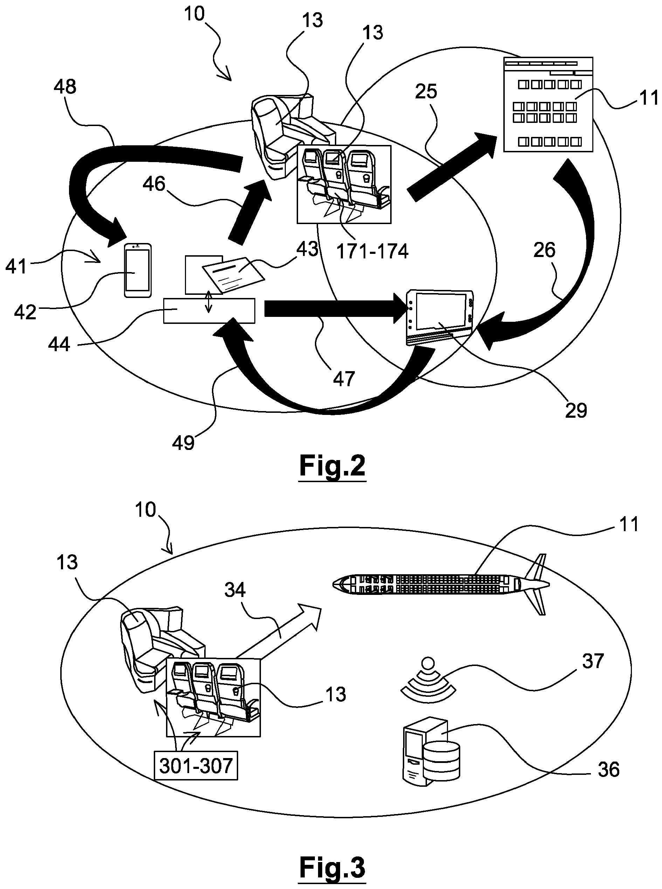

Comme cela est bien visible sur la figure 2, lorsqu'un défaut de positionnement d'une des parties du siège 13 est détecté, un signal d'alerte 25 correspondant, contenant de façon préférentielle également une information de position du siège 13 dans la cabine d'aéronef, est apte à être transmis à l'unité de contrôle 11.

Le signal d'alerte correspond à l'identification d'un état et l'association, par exemple, d'une valeur de seuil. La comparaison de la valeur retournée par le capteur avec la valeur de seuil permet de générer l'information de dépassement de seuil. Les capteurs peuvent soit envoyer un signal d'état et/ou de position qui n'est pas analysé (c'est-à-dire un signal de mesure qui n'est pas comparé avec une valeur seuil), soit envoyer une information issue par exemple de l'analyse du signal de mesure par rapport à une valeur seuil correspondante.

Sur la base de l'information de position du siège 13 dans la cabine d'aéronef, l'emplacement du siège 13 pourra alors s'afficher sur un écran de l'unité de contrôle 11. Ainsi, un membre du personnel de bord pourra intervenir rapidement afin de remédier au défaut détecté et remettre le siège 13 en position TTL avant le décollage ou à l'atterrissage de l'aéronef.

Selon une variante de réalisation, lorsqu'un défaut de positionnement du siège 13 est détecté, un message d'erreur 26 pourra, en outre, être affiché sur un système multimédia 29 (ou système IFE pour "In-Flight Entertainment" en anglais) si la cabine d'aéronef est équipée d'un tel système multimédia 29. Cela permet ainsi au passager de remédier seul au défaut dont il est averti sans avoir à faire intervenir un membre du personnel de bord.

Le système de management 10 comporte un ensemble de capteurs 301-307, apte à détecter ou prédire un dysfonctionnement ou une usure excessive d'un organe du siège 13. Un tel capteur présente un intérêt particulier lorsqu'un des organes a atteint un nombre de cycles d'utilisation maximum.

En l'occurrence, on utilise un capteur de mesure 301 apte à déterminer une épaisseur d'un coussin d'assise 24 pouvant, par exemple, prendre la forme d'un capteur de distance capacitif ou d'un contacteur de position établissant un contact lorsque le coussin d'assise 24 est à une position initiale et jusqu'à un seuil fixé.

Selon une variante de réalisation, le capteur de mesure 301 de l'épaisseur du coussin d'assise 24 pourra être couplé à une jauge de poids 302. Un tel agencement permet de déterminer si le coussin d'assise 24 est apte à fournir un niveau de confort acceptable au passager.

Il est toutefois possible de ne pas utiliser la mesure de poids si l'on mesure le fait que le coussin d'assise 24 revienne au moins une fois dans un délai déterminé (par exemple une fois par jour) à sa position d'origine dans une marge d'erreur prédéfinie permettant de déterminer que la fonction confort soit toujours garantie.

Selon une autre variante de réalisation, le capteur de mesure 301 de l'épaisseur du coussin d'assise 24 pourra être couplé à un compteur de temps pour déterminer si le coussin revient dans son état initial après une durée prédéterminée. Dans le cas contraire, cela est un indicateur d'une perte de performance du siège 13.

Au moins un capteur de charge 303 est intégré dans le siège 13, notamment dans l'assise 24 et/ou le dossier 19 et/ou l'accoudoir 21 du siège 13.

Le capteur de charge 303 pourra, par exemple, être constitué par un système composé d'un ressort taré et d'un contact se déclenchant lorsque le ressort est déformé. Cela permet de détecter une charge excessive appliquée au siège 13, notamment à l'assise 24 et/ou au dossier 19 et/ou à l'accoudoir 21 du siège 13, et/ou de détecter un nombre de cycles d'utilisation.

Au moins un capteur de choc 304 peut également être intégré au siège 13, notamment à une structure du siège 23. Le capteur de choc 304 permet de détecter notamment les chocs subis par le siège 13 et/ou la structure du siège 23, par exemple par des chariots circulant dans la cabine.

Le capteur de choc 304 pourra prendre, par exemple, la forme d'un accéléromètre, d'un capteur tilt, ou d'un capteur piézoélectrique mesurant une déformation.

Au moins un capteur de vibration 305 pourra également être intégré au siège 13. Le capteur de vibration 305 permet notamment de détecter un problème de jeu de montage dans la structure de siège 23.

Alternativement, le capteur de choc 304 pourra le cas échéant assurer une fonction identique au capteur de vibration 305.

Par ailleurs, le siège 13 peut comporter un ou plusieurs accessoires escamotables. Dans un tel agencement, l'accessoire escamotable du siège 13 pourra être équipé d'un capteur de charge 306. Le capteur de charge 306 est apte à détecter une surcharge, notamment due à une détérioration d'un système de guidage de l'accessoire escamotable pour passer d'une position déployée à une position rangée, ou l'application d'efforts excessifs. Le capteur de charge 306 pourra ainsi être intégré dans un bras d'une tablette ou dans une articulation d'un écran du système multimédia 29, en particulier rangé dans un accoudoir.

Par ailleurs, afin d'anticiper une usure précoce d'un élément constitutif et/ou structurel du siège 13 et/ou leur éventuelle corrosion, il est possible de prévoir un capteur de mesure de paramètres d'environnement 307, tels que notamment la température et/ou les vibrations et/ou l'humidité à l'intérieur de la cabine d'aéronef.

Comme cela est bien visible sur la figure 3, lorsqu'un défaut est détecté sur un des éléments constitutif et/ou structurel de siège 13, c'est-à-dire lorsqu'un des éléments constitutifs et/ou structurels présentent, par exemple, un dysfonctionnement ou a atteint un nombre de cycles de fonctionnement limite, un signal d'alerte 34 contenant, notamment, une information de position du siège 13 dans la cabine d'aéronef est transmis à l'unité de contrôle 11 et/ou à un serveur 36 d'un service de maintenance.

La communication des données au serveur 36 pourra être effectuée par l'unité de contrôle 11 via une liaison 37 s'établissant à travers un réseau dédié ou via Internet. Le serveur 36 pourra être situé dans l'aéronef ou au sol. Il pourra s'agir du serveur 36 de la compagnie aérienne et/ou du fabricant d'aéronef et/ou du fabricant de sièges.

Il est à noter que les données de mesure générées par le capteur, notamment le capteur de mesure 301, la jauge de poids 302, le capteur de charge 303, le capteur de choc 304, le capteur de vibration 305, le capteur de charge 306, pourront être extraites au moyen d'un système dédié. L'analyse des données brutes du capteur peut être effectuée à plusieurs niveaux, c'est à dire au niveau du capteur, intégrant par exemple une mémoire contenant les données de mesure à extraire, et/ou au niveau du siège 13, comportant par exemple un module de communication centralisant toutes les données de mesure générées par le capteur, et/ou au niveau de la cabine grâce aux signaux émis vers l'unité de contrôle 11 par le capteur ou par le module de communication, et/ou au niveau du serveur 36 de la compagnie aérienne et/ou du fabricant d'aéronef et/ou du fabricant de sièges auquel sont transmises les données de mesure du différent capteur.

Par ailleurs, comme on peut le voir sur la figure 2, un dispositif d'identification 41 d'un passager est utilisé pour configurer le siège 13 et/ou le système multimédia 29, notamment en fonction de préférences associées au passager.

Le dispositif d'identification 41 pourra être constitué par un terminal de communication mobile 42, tel qu'un téléphone mobile ou un bracelet connecté, ou un lecteur d'identifiant 43, notamment un lecteur de carte électronique 43. Un identifiant apte à être lu par le lecteur d'identifiant 43, peut prendre la forme d'une carte à puce ou d'une carte magnétique.

Dans le cas où il s'agit d'un terminal de communication mobile 42, les préférences du passager pourront être stockées directement dans une mémoire du terminal de communication mobile 42.

Dans le cas où il s'agit d'un lecteur d'identifiant 43 à capacité de stockage limitée, seule l'identification du passager pourra être stockée sur l'identifiant, pouvant, par exemple, prendre la forme d'une carte "grand voyageur" ou de "fidélité" délivrée par les compagnies aériennes.

Une correspondance est alors établie entre l'identifiant et les paramètres définissant les préférences du voyageur stockées dans un serveur 44 du système de management 10 de la cabine d'aéronef.

Selon cette variante de réalisation, une unité de commande du siège 13 peut alors extraire les données et les utiliser pour adapter la configuration du siège 13 et du système multimédia 29 en conséquence. Une transmission des données de paramétrage est matérialisée schématiquement par les flèches 46 et 47 représentées sur la figure 2.

En variante, il sera possible d'utiliser tout autre moyen d'identification du passager, tel que des moyens biométriques, ou des moyens de reconnaissance vocaux.

Dans un exemple de réalisation, les préférences du passager sont définies par au moins une information parmi: une position de siège, une fermeté du siège, une ambiance lumineuse, une température de siège, un réglage olfactif, une information relative à des préférences de films, de musiques, de nourriture, et/ou de boissons.

Le système multimédia 29 pourra en outre être configuré pour enregistrer les informations relatives à des préférences de films, de musiques, de nourriture, et/ou de boissons.

Avantageusement, les modifications des préférences du passager sont enregistrées dans la mémoire du terminal mobile 42 et/ou dans la mémoire du serveur 44 du système de management 10 de la cabine d'aéronef. Une telle transmission des données de préférences mises à jour est matérialisée schématiquement par les flèches 48 et 49 représentées sur la figure 2. Ces modifications de préférences pourront également être transmises au serveur 36 de la compagnie aérienne.

Ainsi, les préférences sont définies par le passager ou enregistrées de façon automatique à partir de réglages effectués sur d'autres vols.

Bien que les fonctionnalités de détection d'une position opérationnelle, de gestion de maintenance, et de gestion des préférences aient été décrites en combinaison, ces fonctionnalités pourront être mise en œuvre indépendamment les unes des autres. Autrement dit, le système de management 10 de la cabine d'aéronef pourra intégrer la fonction de détection de la position TTL et/ou la fonction de gestion de la maintenance et/ou la fonction de gestion des préférences des utilisateurs.

Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention et notamment toutes combinaisons des différents modes de fonctionnement décrits précédemment, pouvant être pris séparément ou en association.

## Revendications

1. Ensemble comportant un siège (13) et un système de management (10) d'une cabine d'aéronef comportant:
- une unité de contrôle (11), et
- un ensemble de capteurs (171-174, 301-307) destiné à être intégré dans le siège (13) et apte à établir une communication avec l'unité de contrôle (11) pour transmettre à l'unité de contrôle (11) au moins un signal relatif à au moins une mesure réalisée par un capteur (171-174, 301-307) de l'ensemble de capteurs,
- ledit ensemble de capteurs (301-307) détecte et/ou prédit un dysfonctionnement et/ou une usure excessive d'un élément constitutif et/ou structurel du siège (13),
**caractérisé en ce que** ledit ensemble de capteurs comporte
- un capteur de charge (303), intégré au siège (13), notamment dans un élément constitutif et/ou structurel du siège (13), détectant un nombre de cycles d'utilisation.

2. Ensemble selon la revendication 1, **caractérisé en ce que** l'ensemble de capteurs (171-174, 301-307) est apte à établir une communication avec l'unité de contrôle (11) via une liaison sans-fil (16).

3. Ensemble selon la revendication 1 ou 2, **caractérisé en ce que** l'ensemble de capteurs (171-174, 301-307) est muni d'un système de captage d'énergie.

4. Ensemble selon l'une quelconque des revendications 1 à 3, **caractérisé en ce que** l'ensemble comporte en outre un dispositif d'identification (41) d'un passager, ledit dispositif d'identification du passager est apte à être utilisé pour configurer ledit siège (13) et/ou un système multimédia (29) en fonction de préférences associées audit passager.

5. Ensemble selon la revendication 4, **caractérisé en ce que** les préférences sont définies par le passager et/ou enregistrées de façon automatique à partir de réglages effectués sur d'autres vols.

6. Ensemble selon la revendication 4 ou 5, **caractérisé en ce que** le dispositif d'identification (41) est constitué par un terminal de communication mobile (42) et/ou un lecteur de carte électronique (43).

7. Ensemble selon l'une quelconque des revendications 4 à 6, **caractérisé en ce que** les préférences du passager sont définies par au moins une information parmi: une position de siège, une fermeté du siège, une ambiance lumineuse, une température de siège, un réglage olfactif, une information relative à des préférences de films, de musiques, de nourriture, et/ou de boissons.

8. Ensemble selon l'une quelconque des revendications 1 à 7, **caractérisé en ce que** l'ensemble de capteurs (171-174) est apte à détecter un réglage de position opérationnelle du siège (13) avant un décollage et/ou à un atterrissage de l'aéronef.

9. Ensemble selon l'une quelconque des revendications 1 à 8, **caractérisé en ce que**, lorsqu'un défaut est détecté, un signal d'alerte (34) contenant au moins une information de position du siège (13) dans la cabine d'aéronef est apte à être transmis à l'unité de contrôle (11) et/ou à un serveur (36) d'un service de maintenance.

10. Ensemble selon l'une quelconque des revendications 1 à 9, **caractérisé en ce qu'**il comporte un capteur de mesure (301) d'une épaisseur de coussin d'assise (24), notamment couplé à une jauge de poids (302).

11. Ensemble selon l'une quelconque des revendications 1 à 10, **caractérisé en ce que** l'ensemble de capteurs comporte un capteur de choc (304) intégré au siège (23), notamment à une structure de siège (23).

12. Ensemble selon l'une quelconque des revendications 1 à 11, **caractérisé en ce que** le capteur de charge (306) est intégré dans un accessoire escamotable du siège (13).

13. Ensemble selon la revendication 12, **caractérisé en ce que** le capteur de charge (306) est intégré dans un bras d'une tablette (18) ou dans une articulation d'un écran d'un système multimédia (29).

14. Ensemble selon l'une quelconque des revendications 1 à 13, **caractérisé en ce que** l'ensemble de capteurs comporte un capteur de mesure de paramètres d'environnement (307), tels que la température, les vibrations, ou l'humidité.

## Patentansprüche

1. Anordnung mit einem Sitz (13) und einem Verwaltungssystem (10) für eine Flugzeugkabine, wobei die Anordnung umfasst:
- eine Steuereinheit (11), und
- einen Satz von Sensoren (171-174, 301-307), die in den Sitz (13) zu integrieren sind und eine Kommunikationsverbindung mit der Steuereinheit (11) herstellen können, um an die Steuereinheit (11) zumindest ein Signal zu senden, das sich auf mindestens eine Messung bezieht, die von einem Sensor (171-174, 301-307) des Satzes von Sensoren durchgeführt wird,
- wobei der Satz von Sensoren (301-307) eine Fehlfunktion und/oder einen übermäßigen Verschleiß einer Komponente und/oder eines Strukturelements des Sitzes (13) erkennt und/oder vorhersagt,
**dadurch gekennzeichnet, dass** der Sensorsatz umfasst
- einen in den Sitz (13), insbesondere in einer Komponente und/oder einem Strukturelement des Sitzes (13), integrierten Lastsensor (303) zur Erfassung einer Anzahl von Benutzungszyklen.

2. Anordnung nach Anspruch 1, **dadurch gekennzeichnet, dass** der Satz von Sensoren (171-174, 301-307) über eine drahtlose Verbindung (16) eine Kommunikationsverbindung mit der Steuereinheit (11) aufbauen kann.

3. Anordnung nach Anspruch 1 oder 2, **dadurch gekennzeichnet, dass** der Satz von Sensoren (171-174, 301-307) mit einem Energieerfassungssystem versehen ist.

4. Anordnung nach einem der Ansprüche 1 bis 3, **dadurch gekennzeichnet, dass** die Anordnung ferner eine Identifikationsvorrichtung (41) für einen Passagier umfasst, wobei die Passagieridentifikationsvorrichtung zum Konfigurieren des Sitzes (13) und/oder eines Multimediasystems (29) gemäß dem Passagier zugeordneten Präferenzen verwendet werden kann.

5. Anordnung nach Anspruch 4, **dadurch gekennzeichnet, dass** die Präferenzen vom Passagier definiert und/oder automatisch aus Einstellungen anderer Flüge erfasst werden.

6. Anordnung nach Anspruch 4 oder 5, **dadurch gekennzeichnet, dass** die Identifikationsvorrichtung (41) aus einem mobilen Kommunikationsterminal (42) und/oder einem elektronischen Kartenleser (43) besteht.

7. Anordnung nach einem der Ansprüche 4 bis 6, **dadurch gekennzeichnet, dass** die Präferenzen des Passagiers durch mindestens eine Information definiert sind unter: einer Sitzposition, einer Sitzhärte, einem Lichtambiente, einer Sitztemperatur, einer Geruchseinstellung, eine Information bezüglich Film-, Musik-, Essens- und/oder Getränkepräferenzen.

8. Anordnung nach einem der Ansprüche 1 bis 7, **dadurch gekennzeichnet, dass** der Satz von Sensoren (171-174) eine Betriebspositionseinstellung des Sitzes (13) vor dem Start und/oder bei der Landung eines Flugzeuges erfassen kann.

9. Anordnung nach einem der Patentansprüche 1 bis 8, **dadurch gekennzeichnet, dass** bei Erkennen eines Defekts ein Warnsignal (34) mit mindestens einer Positionsinformation des Sitzes (13) in der Kabine des Flugzeugs an die Steuereinheit (11) und/oder an einen Server (36) eines Wartungsdienstes übermittelt werden kann.

10. Anordnung nach einem der Ansprüche 1 bis 9, **dadurch gekennzeichnet, dass** sie einen Messsensor (301) für eine Sitzflächenpolsterdicke (24), insbesondere gekoppelt mit einem Gewichtsmesser (302), umfasst.

11. Anordnung nach einem der Ansprüche 1 bis 10, **dadurch gekennzeichnet, dass** der Sensorsatz einen in den Sitz (23), insbesondere in eine Sitzstruktur (23), integrierten Aufprallsensor (304) umfasst.

12. Anordnung nach einem der Ansprüche 1 bis 11, **dadurch gekennzeichnet, dass** der Lastsensor (306) in ein einziehbares Zubehörteil des Sitzes (13) integriert ist.

13. Anordnung nach Anspruch 12, **dadurch gekennzeichnet, dass** der Lastsensor (306) in einen Arm eines Tablets (18) oder in ein Gelenk eines Bildschirms eines Multimediasystems (29) integriert ist.

14. Anordnung nach einem der Ansprüche 1 bis 13, **dadurch gekennzeichnet, dass** der Satz von Sensoren einen Sensor zum Messen von Umgebungsparametern (307) wie Temperatur, Vibrationen oder Feuchtigkeit umfasst.

## Claims

1. Assembly comprising a seat (13) and a management system (10) for an aircraft cabin, said assembly comprising:
- a control unit (11), and
- a set of sensors (171-174, 301-307) to be integrated into the seat (13) and capable of establishing a communication connection with the control unit (11) so as to transmit to the control unit (11) at least one signal relating to at least one measurement performed by a sensor (171-174, 301-307) of the set of sensors,
- said set of sensors (301-307) detecting and/or predicting a malfunction and/or an excessive wear of a component and/or structural element of the seat (13), **characterized in that** said set of sensors comprises
- a load sensor (303), integrated in the seat (13), in particular in a component and/or structural element of the seat (13), for detecting a number of cycles of use.

2. Assembly according to claim 1, **characterized in that** the set of sensors (171-174, 301-307) is capable of establishing a communication connection with the control unit (11) via a wireless link (16).

3. Assembly according to claim 1 or 2, **characterized in that** the set of sensors (171-174, 301-307) is provided with an energy capture system.

4. Assembly according to any one of the claims 1 to 3, **characterized in that** the assembly further comprises an identification device (41) for a passenger, said passenger identification device being adapted to be used for configuring said seat (13) and/or a multimedia system (29) according to preferences associated with said passenger.

5. Assembly according to claim 4, **characterized in that** the preferences are defined by the passenger and/or are recorded automatically from settings made on other flights.

6. Assembly according to claim 4 or 5, **characterized in that** the identification device (41) consists of a mobile communication terminal (42) and/or an electronic card reader (43) .

7. Assembly according to any one of the claims 4 to 6, **characterized in that** the passenger's preferences are defined by at least one information among: a seat position, a firmness of the seat, a light ambiance, a seat temperature, an olfactory setting, an information relating to movie, music, food, and/or drink preferences.

8. Assembly according to any one of the claims 1 to 7, **characterized in that** the set of sensors (171-174) is capable of detecting an operational position adjustment of the seat (13) before take-off and/or at landing of an aircraft.

9. Assembly according to any one of the claims 1 to 8, **characterized in that**, when a defect is detected, a warning signal (34) containing at least one position information of the seat (13) in the cabin of the aircraft can be transmitted to the control unit (11) and/or to a server (36) of a maintenance service.

10. Assembly according to any one of the claims 1 to 9, **characterized in that** it comprises a measurement sensor (301) for a seating cushion thickness (24), in particular coupled to a weight gauge (302).

11. Assembly according to any one of the claims 1 to 10, **characterized in that** the set of sensors comprises a shock sensor (304) integrated into the seat (23), in particular into a seat structure (23).

12. Assembly according to any one of the claims 1 to 11, **characterized in that** the load sensor (306) is integrated into a retractable accessory of the seat (13).

13. Assembly according to claim 12, **characterized in that** the load sensor (306) is integrated in an arm of a tablet (18) or in an articulation of a screen of a multimedia system (29) .

14. Assembly according to any one of the claims 1 to 13, **characterized in that** the set of sensors comprises a sensor for measuring environmental parameters (307), such as temperature, vibrations, or humidity.
